# EUROPEAN PATENT APPLICATION

(11) **EP 3 009 837 A1**
(43) Date of publication of application: **20.04.2016**
(21) Application number: 14188988.1
(22) Date of filing: 15.10.2014
(51) Int. Cl.: G01N 30/72, G01N 30/06

(54) **Method for mass spectrometry analysis and compounds useful therefor**

(71) Applicant: Lumiprobe GmbH, 30625 Hannover (DE)
(72) Inventor: Brylev, Vladimir A., 30625 Hannover (DE); Topolyan, Artem P., 30625 Hannover (DE); Korshun, Vladimir A., 30625 Hannover (DE); Ustinov, Alexey V., 30625 Hannover (DE)
(74) Representative: Kröncke, Rolf

(57) **Abstract**

The application relates to a method for mass spectrometry analysis of components in a sample whereby said components are labeled with a mass tag. Said mass tags are compounds capable of generating aromatic ions containing 4n+2 electrons in a closed ring system whereby the method for mass spectrometry includes detecting by mass spectrometry of aromatic ions containing 4n+2 electrons in the closed ring system whereby the charge is located within the aromatic system. In preferred embodiments, the tags comprise triaryl-cyclopropenium and substituted dibenzo-cycloheptatrienyl (tropyl) carbonium ions. A kit of reagents comprising such mass tags is also disclosed.

## Description

In a first aspect, the present invention relates to a method for mass spectrometry analysis of components in a sample whereby said components are labeled with a mass tag. Said mass tag are compounds capable of generating aromatic ions containing 4n+2 electrons in a closed ring system whereby the method for mass spectrometry includes detecting by mass spectrometry of aromatic ions containing 4n+2 electrons in the closed ring system whereby the charge is located within the aromatic system. Further, the present invention provides new compounds useful as mass tags in mass spectrometry, said compounds form aromatic ions containing 4n+2 electrons in the closed ring system whereby n is a natural number including zero and the charge is located within the aromatic system allowing detection thereof by mass spectrometry. The compounds according to the present invention are particularly useful in a method for mass spectrometry analysis of components in a sample whereby the compounds of the present invention are used as mass tags labeling the components in the sample to be analysed. Finally, the present invention relates to a kit of reagents containing the components according to the present invention as well as its use in mass spectrometry analysis.

### Prior art

Over the last decades, mass spectrometry has come a valuable tool for molecular biology. However, potential of cleavable labels for mass spectrometry, which are also called mass tags, is still underestimated.

Mass tags are molecular labels which robustly form distinct peaks in mass spectra. Typically, they are attached to molecules of interest (MOI). Mostly, attachment is by covalent binding of the mass tags to the MOI. Typical MOI includes oligonucleotides or antibodies. Linkage is typically achieved by functional groups. When these conjugates composed of MOI and mass tags are subjected to mass spectrometry, they exhibit well detectable signals originating from the mass tags attached.

The discovery of analytes in the assays is mediated by detection of mass tag by mass spectrometry. The presence of the mass tag peak in mass spectrum allows to draw a conclusion about the presence of particular analyte in a sample. This is similar to the philosophy employed in fluorescence-based assays, where the presence of fluorescence is used as analytical signal, and related to discovery of particular analyte.

At present, prospects of mass-tag mediated detection of molecules of interest including bio molecules are limited by the availability of efficient and affordable mass tags, and a few types of structures have been proposed as mass tags. For example, Thompson, A.; et al., Anal. Chem., 2003, 75, 1895-1904 describe ionogenic groups which represent residues of strong bases like guanidine providing good ionization for mass spectrometry. However, when using the same for multiplexing of diagnostic assays, mass tags must be cleavable from analyte during analysis. This can be achieved by the use of MS/MS fragmentation techniques, which require desorption of analyte-mass tag conjugates, which reduces sensitivity. MS/MS technology also requires advanced mass spectrometry instrumentation.

In addition, trityl mass tags are described in the art. That is, trityl ions are among the most potent structures known today to be used as mass tags for positive ion mode, for example, as specified by Ustinov, A.V., et al., Org. Biomol. Chem., 2008, 6, 4593-4608. Trityl cations are able to cleave from labeled molecules during MALDI, which avoids the need to use MS/MS, as well as to obtain mass tag-biomolecule conjugates in gas phase as a first step of ionization. Trityl ions have been used for SNP genotyping, Birikh, K.R., et al., Meth. Mol. Biol., 2009, 578, 345-61, as well as for mass spectrometry imaging, e.g. WO 2010/026225 A2.

However, the sensitivity of the trityl ions used as mass tags with MALDI ionization is still non-optimal. Firstly, non-ionized tritylated molecules do not absorb laser energy efficiently, because the line of typical MALDI lasers lie well above their absorption bands (which are below 300 nm), while absorption of laser energy by analyte seems to be crucial for both MALDI, and matrix-free LDI modes of ionization. Secondly, triphenylmethyl provides comparatively good stabilization for negative charge, positive charge, and radical. Therefore, a large fraction of mass tags undergoes homolytic cleavage from the analyte, which leads to the formation of radicals instead of ions, which in turn do not contribute to analytical signal detected by mass spectrometer.

Hence, while few detection methods based on mass tag technology have developed, and many more can be envisaged from existing fluorescence-based assays, there is a strong need to develop new mass tags possessing adequate properties for the use in diagnostic assays, as well as molecular biology research.

The aim of the present invention is to provide new compounds being particularly suitable as mass tags for mass spectrometry analysis as well as methods for mass spectrometry analysis.

### Summary of the present invention

In a first aspect, the present invention relates to a method for mass spectrometry analysis of components in a sample whereby said components are labelled with compounds capable of generating aromatic ions comprising steps of
- contacting the sample to be analysed with compounds capable of generating aromatic ions containing 4n+2 electrons in a closed ring system, whereby n is a natural number including zero and the charge is located within the aromatic system;
- optional binding of said compounds capable of generating aromatic ions with components of the sample,
- optional workup of the sample,
- detecting by mass spectrometry of aromatic ions containing 4n+2 electrons in the closed ring system where n is a natural number including zero and the charge is located within the aromatic system.

The compounds capable of generating aromatic ions are preferably compounds of the general structure of general formula I, like II or III as well as IV.

In a further aspect, the present invention relates to compounds of the general structure of formula I 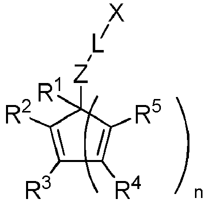 wherein the substituents are defined as given below. Preferably, the compounds are compounds of general formula III.

These compounds may be used in a method according to the present invention. Moreover, the present invention provides a kit of reagents containing the compounds according to the present invention. In addition, the present invention relates to the use of said kit of reagents containing the compounds according to the present invention in mass spectrometry analysis, for example, their use in a method according to the present invention.

### Description of the drawings

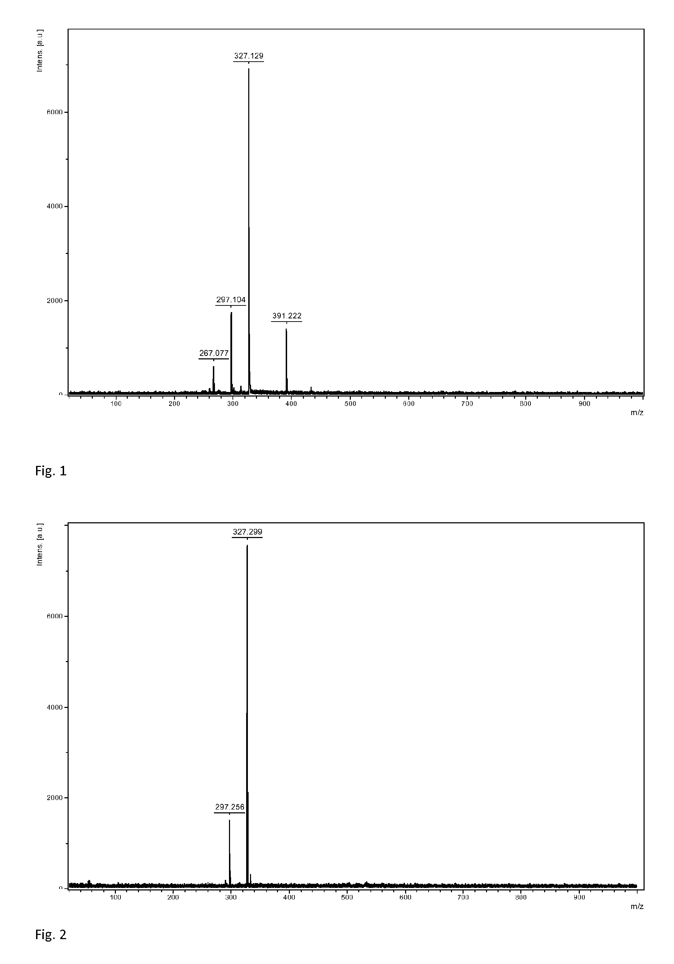

Figure 1. MALDI-TOF spectrum of a mixture of 1a [peak 267], 1b [peak 297], 1c [peak 327] and 1e [peak 391] in 2,4,6-trihydroxyacetophenone (THAP) matrix.
Figure 2. LDI-TOF spectrum of a mixture of 1 a [peak 267 not seen], 1b [peak 297], 1c [peak 327] and trimethoxytrityl tetrafluoroborate [peak 333 not seen].

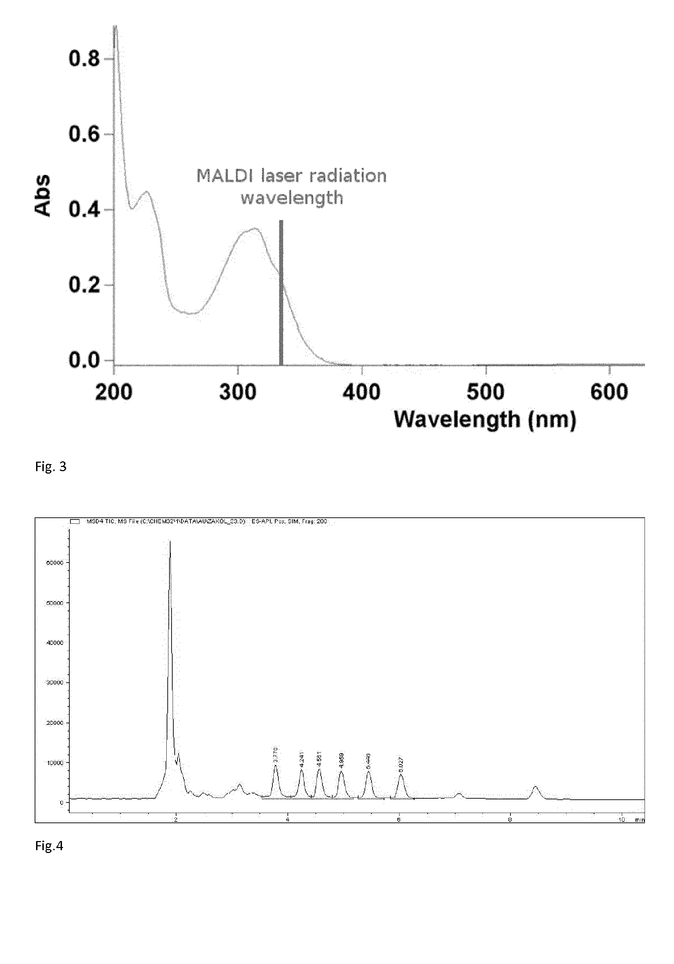

Figure 3. Absorbance spectrum of compound 5a, showing absorbance at MALDI laser wavelength.
Figure 4. HPLC-MS analysis of equimolar mixture of amines (methylamine, propylamine, butylamine, pentylamine, hexylamine, heptylamine) derivatized with **6a**, SIM mode detection on 267 Da. Peaks at approx 2 min correspond to NHS ester **6a** and free acid **5a**.

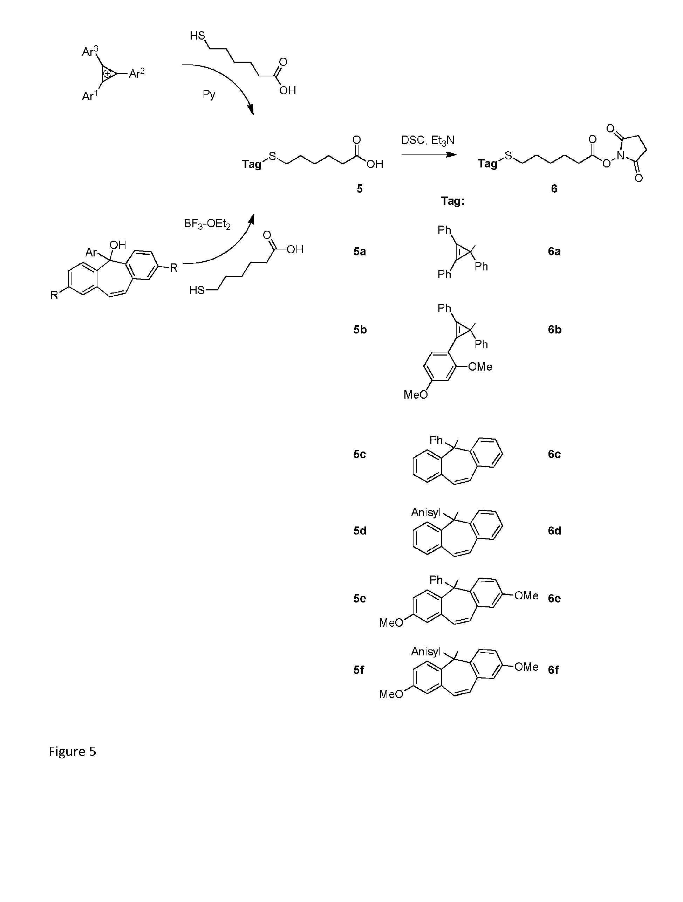

Figure 5: Figure 5 is a scheme of the synthesis pathway of the compounds according to the present invention. Namely, the synthesis of functionalized cyclopropenilium and tropylium mass tags for the conjugation with biomolecules is shown. Derivatives having a carboxy group have been prepared. These derivatives are versatile precursor molecules allowing the preparation of other reactive derivatives including thiol-reactive maleimides, carbonyl reactive hydrazides, and other reagents. Here mercaptohexanoic acid has been chosen as a linker between cation moiety and carboxy group. Use of a weak base, like pyridine (py) allows coupling of the triarylcyclopropenilium ions with mercaptohexanoic acid. Aryldibenzotropilium alcohols were coupled with thiohexanoic acid without isolation of corresponding cations. Instead, catalytic amounts of BF3 etherate were used. The carboxy groups of compounds 5 were activated by disuccinimidyl carbonate to obtain amine-reactive NHS ester 6, which were used for the labeling of biomolecules. Details of the synthesis steps can be found in the experimental part.

### Detailed description of the present invention

In a first aspect, the present invention provides a method for mass spectrometry analysis of components in a sample whereby said components are labelled with compounds capable of generating aromatic ions comprising the steps of
- contacting the sample to be analysed with compounds capable of generating aromatic ions containing 4n+2 electrons in a closed ring system, whereby n is a natural number including zero and the charge is located within the aromatic system;
- covalent or non-covalent binding of said compounds capable of generating aromatic ions with components of the sample,
- optional workup of the sample,
- detecting by mass spectrometry of aromatic ions containing 4n+2 electrons in the closed ring system where n is a natural number including zero and the charge is located within the aromatic system.

As used herein, the term "compounds capable of generating aromatic ions" is used interchangeably herein with the term "mass tag" or "mass tags" referring to compounds following the Hückel's rule regarding aromaticity of monocyclic structures containing 4n+2 electrons which intern leads to extended stability of said compounds. The compounds include also compounds like tricyclic compounds, where the central ring alone follows the Hückel's rule. That is, the compounds capable of generating aromatic ions are compounds which, when supposed to be analysed in mass spectrometry, are present as aromatic compounds following the Hückel's rule having π-electrons equalling 4n+2 wherein n is zero or any positive integer. Typically, these molecules are planar, cyclic and possess an sp3-hybridized atom which can lose one of the substituents by heterolytical cleavage, leading to the generation of aromatic ion containing 4n+2 electrons in a closed ring system.

The compounds capable of generating aromatic ions containing 4n+2 electrons in a closed ring system, whereby n is a natural number including zero may contain heteroatoms. In this connection, the term "heteroatom" means an atom other than carbon in the ring of a heterocyclic group. Preferably, heteroatoms are selected from the group consisting of nitrogen, sulphur, phosphor and oxygen atoms. Compounds containing more than one heteroatom may contain different heteroatoms.

The compounds capable of generating aromatic ions containing 4n+2 electrons in a closed ring system are characterized in that the charge of the ion is located within the aromatic system. That is, the present inventors recognized while ionization is a process which solely determines efficiency of mass spectrometry, stabilization of cations or anions by aromaticity provides mass tags allowing an increase of the sensitivity of various mass spectrometry assays.

It is known that stabilization causes efficient formation of aromatic ions in mass spectrometry. Spontaneous formation of tropilium ions in mass spectrometry is known for decades. However, ions stabilized by aromaticity have not been used as labels, markers, or additives to enhance mass spectrometry analysis. This type of stabilization allows to increase propensity to ionization of neutral molecules, derived from stabilized ion structures. Of note, the aromatic cations/anions suitable as mass tags need not necessarily be present in the assayed mixture per se but the analytical methods may benefit from the use of neutral molecules which are capable of the generation of stabilized aromatic cations/anions directly in the ion source.

That is, the ions stabilized by aromaticity are typically generated directly in the ion source before detecting the same by mass spectrometry.

For example, in case of cations, the structures of these neutral molecules can be proposed by the nucleophilic addition of various anionic moieties to the stabilized aromatic cations. This consideration can be reversed to form precursors of stabilized anions. Heterolytic cleavage of the bond between fragments and stabilized ions either *in situ*, or before the analysis, leads to the generation of stabilized ions which are sensitively detected by mass spectrometry.

The labelling of the components with the compounds capable of generating aromatic ions may be effected by covalent or non-covalent binding. As mentioned before, the cleavage of said covalent or non-covalent bond may be effected either in situ or before the analysis.

After labelling the components with the mass tag, the sample may be work up further. That is, known methods may be applied to work up the sample including concentration, separation of the labelled components from the label or the non-labelled components by chromatography, affinity binding, electophoresis or other methods.

The mass tags are detected by mass spectrometry according to well-known methods. Suitable mass spectrometry ionization methods includes the following: electrospray ionization, matrix assisted or matrix-free laser desorption ionization, chemical ionization, photoionization, electron impact ionization. The mass tags are compatible with different mass selective detectors such as quadrupols, time of flight, magnetic sectors, and ion trap detectors.

In a further aspect, the present invention relates to compounds of the general structure of formula I 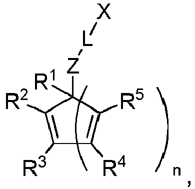
wherein n is a natural number including zero, R¹, R², R³, R⁴ and R⁵ are independently selected from hydrogen, aryl, alkyl-, heteroaryl-, arylthiol-, alkylthiol-, aryloxy-, alkyloxy-, amino-, cyano-, nitro-, carboxy-, ester-, amide-, acyl-, formyl-groups;
L is a linker with C₁ to C₂₀ carbon atoms;
Z is selected from O, S, Se, NR wherein R is H, alkyl or aryl,
X is a functional group, preferably COOH; COOR¹¹ wherein R¹¹ is succinimide, aryl, azide, alkyne, maleimide, hydrazine, hydrazide, hydroxylamine, amine, aldehyde, alkyl or arylketone, thiol, disulfide.

In this connection, the following is noted:

The expression alkyl refers to a saturated, straight-chain or branched hydrocarbon group that contains from 1 to 20 carbon atoms, preferably from 1 to 12 carbon atoms, especially from 1 to 6 (e.g. 1, 2, 3 or 4) carbon atoms, for example a methyl, ethyl, propyl, iso-propyl, n-butyl, iso-butyl, sec-butyl, tert-butyl, n-pentyl, iso-pentyl, n-hexyl, 2,2-dimethylbutyl or n-octyl group.

The expressions alkenyl and alkyne refer to at least partially unsaturated, straight- chain or branched hydrocarbon groups that contain from 2 to 20 carbon atoms, preferably from 2 to 12 carbon atoms, especially from 2 to 6 (e.g. 2, 3 or 4) carbon atoms, for example an ethenyl (vinyl), propenyl (allyl), iso-propenyl, butenyl, ethinyl, propinyl, butinyl, acetylenyl, propargyl, isoprenyl or hex-2-enyl group. Preferably, alkenyl groups have one or two (especially preferably one) double bond(s), and alkyne groups have one or two (especially preferably one) triple bond(s).

Furthermore, the terms alkyl, alkenyl and alkyne refer to groups in which one or more hydrogen atoms have been replaced by a halogen atom (preferably F or Cl) such as, for example, a 2,2,2-trichloroethyl or a trifluoromethyl group.

The expression heteroalkyl refers to an alkyl, alkenyl or alkyne group in which one or more (preferably 1, 2 or 3) carbon atoms have been replaced by an oxygen, nitrogen, phosphorus, boron, selenium, silicon or sulfur atom (preferably by an oxygen, sulfur or nitrogen atom) or by a SO or a SO₂ group. The expression heteroalkyl furthermore refers to a carboxylic acid or to a group derived from a carboxylic acid, such as, for example, acyl, acylalkyl, alkoxycarbonyl, acyloxy, acyloxyalkyl, carboxyalkylamide or alkoxycarbonyloxy.

Preferably, a heteroalkyl group contains from 1 to 12 carbon atoms and from 1 to 4 hetero atoms selected from oxygen, nitrogen and sulphur (especially oxygen and nitrogen). Especially preferably, a heteroalkyl group contains from 1 to 6 (e.g. 1, 2, 3 or 4) carbon atoms and 1, 2 or 3 (especially 1 or 2) hetero atoms selected from oxygen, nitrogen and sulphur (especially oxygen and nitrogen). The term C1-C6 heteroalkyl refers to a heteroalkyl group containing from 1 to 6 carbon atoms and 1, 2 or 3 heteroatoms selected from O, S and/or N (especially O and/or N). The term C1 - C4 heteroalkyl refers to a heteroalkyl group containing from 1 to 4 carbon atoms and 1, 2 or 3 heteroatoms selected from O, S and/or N (especially O and/or N). Furthermore, the term heteroalkyl refers to groups in which one or more hydrogen atoms have been replaced by a halogen atom (preferably F or Cl).

Examples of heteroalkyl groups are groups of formulae: R^{a}-O-Y^{a}-, R^{a}-S-Y^{a}-, R^{a}-SO-Y^{a}-, R^{a}-SO₂-Y^{a}-, R^{a}-N(R^{b})-Y^{a}-, R^{a}-CO-Y^{a}-, R^{a}-O-CO-Y^{a}-, R^{a}-CO-O-Y^{a}-, R^{a}CO-N(R^{b})-Y^{a}, R^{a}-N(R^{b})-CO-Y^{a}-, R^{a}O-CO-N(R^{b})-^{a}b, R^{a}-N(R^{b})-CO-O-Y^{a}-, R^{a}-N(R^{b})-CO-N(R^{c})-Y^{a}-, R^{a}-O-CO-O-Y^{a}-, R^{a}-N(R^{b})-C(=NR^{d})-N(R^{c})-Y^{a}-, R^{a}-CS-Y^{a}-, R^{a}-O-CS-Y^{a}-, R^{a}-CS-O-Y^{a}-, R^{a}-CS-N(R^{b})-Y^{a}-, R^{a}-N(R^{b})-CS-Y^{a}-, R^{a}-O-CS-N(R^{b})-Y^{a}-, R^{a}-N(R^{b})-CS-O-Y^{a}-, R^{a}-N(R^{b})-CS-N(R^{c})-Y^{a}-, R^{a}-O-CS-O-Y^{a}-, R^{a}-S-CO-Y^{a}-, R^{a}-CO-S-Y^{a}-, R^{a}-S-CO-N(R^{b})-Y^{a}-, R^{a}-N(R^{b})-CO-S-Y^{a}-, R^{a}-S-CO-O-Y^{a}-, R^{a}-O-CO-S-Y^{a}-, R^{a}-S-CO-S-Y^{a}-, R^{a}-S-CS-Y^{a}-, R^{a}CS-S-Y^{a}-, R^{a}-S-CS-N(R^{b})-Y^{a}-, R^{a}-N(R^{b})-CS-S-Y^{a}-, R^{a}-S-CS-O-Y^{a}-, R^{a}-O-CS-S-Y^{a}-, wherein R^{a} being a hydrogen atom, a C₁- C₆ alkyl, a C₂-C₆ alkenyl or a C₂-C₆ alkyne group; R^{b} being a hydrogen atom, a C₁-C₆ alkyl, a C₂-C₆ alkenyl or a C₂-C₆ alkyne group; R^{c} being a hydrogen atom, a C₁-C₆ alkyl, a C₂-C₆ alkenyl or a C₂-C₆ alkyne group; R^{d} being a hydrogen atom, a C₁-C₆ alkyl, a C₂-C₆ alkenyl or a C₂-C₆ alkyne group and Y^{a} being a bond, a C₁-C₆ alkylene, a C₂-C₆ alkenylene or a C₂-C₆ alkkynelene group, wherein each heteroalkyl group contains at least one carbon atom and one or more hydrogen atoms may be replaced by fluorine or chlorine atoms.

Specific examples of heteroalkyl groups are methoxy, trifluoromethoxy, ethoxy, n-propyloxy, isopropyloxy, butoxy, *tert*-butyloxy, methoxymethyl, ethoxymethyl, -CH-₂CH₂OH, -CH₂OH, -SO₂Me, methoxyethyl, 1-methoxyethyl, 1-ethoxy-ethyl, 2-methoxyethyl or 2-ethoxyethyl, methylamino, ethylamino, propylamino, isopropylamino, dimethylamino, diethylamino, isopropylethylamino, methylamino methyl, ethylamino methyl, diisopropylamino ethyl, methylthio, ethylthio, iso-propylthio, enol ether, dimethylamino methyl, dimethylamino ethyl, acetyl, propionyl, butyryloxy, acetyloxy, methoxycarbonyl, ethoxycarbonyl, propionyloxy, acetylamino or propionylamino, carboxymethyl, carboxyethyl or carboxypropyl, N-ethyl-N-methylcarbamoyl or N-methylcarbamoyl. Further examples of heteroalkyl groups are nitrile, isonitrile, cyanate, thiocyanate, isocyanate, isothiocyanate and alkylnitrile groups.

The expression cycloalkyl refers to a saturated or partially unsaturated (for example, a cycloalkenyl group) cyclic group that contains one or more rings (preferably 1 or 2), and contains from 3 to 14 ring carbon atoms, preferably from 3 to 10 (especially 3, 4, 5, 6 or 7) ring carbon atoms. The expression cycloalkyl refers furthermore to groups in which one or more hydrogen atoms have been replaced by fluorine, chlorine, bromine or iodine atoms or by OH, =O, SH, =S, NH₂, =NH, N₃ or NO₂ groups, thus, for example, cyclic ketones such as, for example, cyclohexanone, 2-cyclohexenone or cyclopentanone. Further specific examples of cycloalkyl groups are a cyclopropyl, cyclobutyl, cyclopentyl, spiro[4,5]decanyl, norbornyl, cyclohexyl, cyclopentenyl, cyclohexadienyl, decalinyl, bicyclo[4.3.0]nonyl, tetraline, cyclopentylcyclohexyl, fluorocyclohexyl or cyclohex-2-enyl group.

The expression heterocycloalkyl refers to a cycloalkyl group as defined above in which one or more (preferably 1, 2 or 3) ring carbon atoms have been replaced by an oxygen, nitrogen, silicon, selenium, phosphorus or sulfur atom (preferably by an oxygen, sulfur or nitrogen atom) or a SO group or a SO₂ group. A heterocycloalkyl group has preferably 1 or 2 ring(s) containing from 3 to 10 (especially 3, 4, 5, 6 or 7) ring atoms (preferably selected from C, O, N and S). The expression heterocycloalkyl refers furthermore to groups that are substituted by fluorine, chlorine, bromine or iodine atoms or by OH, =O, SH, =S, NH₂, =NH, N₃ or NO₂ groups. Examples are a piperidyl, prolinyl, imidazolidinyl, piperazinyl, morpholinyl, urotropinyl, pyrrolidinyl, tetrahydrothiophenyl, tetrahydropyranyl, tetrahydrofuryl or 2-pyrazolinyl group and also lactames, lactones, cyclic imides and cyclic anhydrides.

The expression alkylcycloalkyl refers to groups that contain both cycloalkyl and also alkyl, alkenyl or alkyne groups in accordance with the above definitions, for example alkylcycloalkyl, cycloalkylalkyl, alkylcycloalkenyl, alkenylcycloalkyl and alkynylcyclo- alkyl groups. An alkylcycloalkyl group preferably contains a cycloalkyl group that contains one or two rings having from 3 to 10 (especially 3, 4, 5, 6 or 7) ring carbon atoms, and one or two alkyl, alkenyl or alkyne groups (especially alkyl groups) having 1 or 2 to 6 carbon atoms.

The expression heteroalkylcycloalkyl refers to alkylcycloalkyl groups as defined above in which one or more (preferably 1, 2 or 3) carbon atoms have been replaced by an oxygen, nitrogen, silicon, selenium, phosphorus or sulfur atom (preferably by an oxygen, sulfur or nitrogen atom) or a SO group or a SO₂ group. A heteroalkylcycloalkyl group preferably contains 1 or 2 rings having from 3 to 10 (especially 3, 4, 5, 6 or 7) ring atoms, and one or two alkyl, alkenyl, alkyne or heteroalkyl groups (especially alkyl or heteroalkyl groups) having from 1 or 2 to 6 carbon atoms. Examples of such groups are alkylheterocycloalkyl, alkylheterocycloalkenyl, alkenyl- heterocycloalkyl, alkynylheterocycloalkyl, heteroalkylcycloalkyl, heteroalkylhetero- cycloalkyl and heteroalkylheterocycloalkenyl, the cyclic groups being saturated or mono-, di- or tri-unsaturated.

The expression aryl refers to an aromatic group that contains one or more rings containing from 6 to 14 ring carbon atoms, preferably from 6 to 10 (especially 6) ring carbon atoms. The expression aryl refers furthermore to groups that are substituted by fluorine, chlorine, bromine or iodine atoms or by OH, SH, NH₂, N₃ or NO₂ groups. Examples are the phenyl, naphthyl, biphenyl, 2-fluorophenyl, anilinyl, 3-nitrophenyl or 4-hydroxyphenyl group. "Aryl" may be exemplified by phenyl or benzyl or naphthyl. The aryl group may be substituted or unsubstituted. Substituents may also be themselves substituted. When substituted, the substituent group is preferably, but not limited to, alkyl, alkoxy, heteroaryl, acyl, carboxyl, amido, carbamoyl, carbonylamino, nitro, amino, cyano, halogen or hydroxyl. The substituents may be positioned at various locations on an aryl group. For example, substituents on a phenyl group may be located at an ortho-position, a meta-position, the para-position, or combinations thereof.

The expression heteroaryl refers to an aromatic group that contains one or more rings containing from 5 to 14 ring atoms, preferably from 5 to 10 (especially 5 or 6 or 9 or 10) ring atoms, and contains one or more (preferably 1 , 2, 3 or 4) oxygen, nitrogen, phosphorus or sulfur ring atoms (preferably O, S or N). The expression heteroaryl refers furthermore to groups that are substituted by fluorine, chlorine, bromine or iodine atoms or by OH, SH, N₃, NH₂ or NO₂ groups. Examples are pyridyl (e.g. 4-pyridyl), imidazolyl (e.g. 2-imidazolyl), phenylpyrrolyl (e.g. 3-phenylpyrrolyl), thiazolyl, isothiazolyl, 1,2,3-triazolyl, 1,2,4-triazolyl, oxadiazolyl.thiadiazolyl, indolyl, indazolyl, tetrazolyl, pyrazinyl, pyrimidinyl, pyridazinyl, oxazolyl, isoxazolyl, triazolyl, tetrazolyl, isoxazolyl, indazolyl, indolyl, benzimidazolyl, benzoxazolyl, benzisoxazolyl, benzthiazolyl, pyridazinyl, quinolinyl, isoquinolinyl, pyrrolyl, purinyl, carbazolyl, acridinyl, pyrimidyl, 2,3'-bifuryl, pyrazolyl (e.g. 3-pyrazolyl) and isoquinolinyl groups.

The expression aralkyl refers to groups containing both aryl and also alkyl, alkenyl, alkyne and/or cycloalkyl groups in accordance with the above definitions, such as, for example, arylalkyl, arylalkenyl, arylalkyne, arylcycloalkyl, arylcycloalkenyl, alkylarylcycloalkyl and alkylarylcycloalkenyl groups. Specific examples of aralkyls are toluene, xylene, mesitylene, styrene, benzyl chloride, o-fluorotoluene, 1H-indene, tetraline, dihydronaphthalene, indanone, phenylcyclopentyl, cumene, cyclohexylphenyl, fluorene and indane. An aralkyl group preferably contains one or two aromatic ring systems (1 or 2 rings) containing from 6 to 10 carbon atoms and one or two alkyl, alkenyl and/or alkyne groups containing from 1 or 2 to 6 carbon atoms and/or a cycloalkyl group containing 5 or 6 ring carbon atoms.

The expression heteroaralkyl refers to an aralkyl group as defined above in which one or more (preferably 1, 2, 3 or 4) carbon atoms have been replaced by an oxygen, nitrogen, silicon, selenium, phosphorus, boron or sulfur atom (preferably oxygen, sulfur or nitrogen), that is to say to groups containing both aryl or heteroaryl, respectively, and also alkyl, alkenyl, alkyne and/or heteroalkyl and/or cycloalkyl and/or heterocycloalkyl groups in accordance with the above definitions. A heteroaralkyl group preferably contains one or two aromatic ring systems (1 or 2 rings) containing from 5 or 6 to 10 ring carbon atoms and one or two alkyl, alkenyl and/or alkyne groups containing 1 or 2 to 6 carbon atoms and/or a cycloalkyl group containing 5 or 6 ring carbon atoms, wherein 1, 2, 3 or 4 of these carbon atoms have been replaced by oxygen, sulfur or nitrogen atoms.

Examples are arylheteroalkyl, arylheterocycloalkyl, arylheterocycloalkenyl, arylalkyl- heterocycloalkyl, arylalkenylheterocycloalkyl, arylalkynylheterocycloalkyl, arylalkyl- heterocycloalkenyl, heteroarylalkyl, heteroarylalkenyl, heteroarylalkynyl, heteroaryl- heteroalkyl, heteroarylcycloalkyl, heteroarylcycloalkenyl, heteroarylheterocycloalkyl, heteroarylheterocycloalkenyl, heteroarylalkylcycloalkyl, heteroarylalkylheterocyclo- alkenyl, heteroarylheteroalkylcycloalkyl, heteroarylheteroalkylcycloalkenyl and heteroarylheteroalkylheterocycloalkyl groups, the cyclic groups being saturated or mono-, di- or tri-unsaturated. Specific examples are a tetrahydroisoquinolinyl, benzoyl, 2- or 3-ethylindolyl, 4-methylpyridino, 2-, 3- or 4-methoxyphenyl, 4-ethoxy-phenyl, 2-, 3- or 4-carboxyphenylalkyl group.

As already stated above, the expressions cycloalkyl, heterocycloalkyl, alkylcycloalkyl, heteroalkylcycloalkyl, aryl, heteroaryl, aralkyl and heteroaralky also refer to groups that are substituted by fluorine, chlorine, bromine or iodine atoms or by OH, =O, SH, =S, NH₂, =NH, N₃ or NO₂ groups.

The expression "optionally substituted" especially refers to groups that are optionally substituted by fluorine, chlorine, bromine or iodine atoms or by OH, =O, SH, =S, NH₂, =NH, N₃ or NO₂ groups. This expression refers furthermore to groups that may be substituted by one, two, three or more unsubstituted C₁-C₁₀ alkyl, C₂-C₁₀ alkenyl, C₂-C₁₀ alkyne, C₁-C₁₀ heteroalkyl, C₃-C₁₈ cycloalkyl, C₂-C₇ heterocycloalkyl, C₄-C₂₀ alkylcycloalkyl, C₂-C₁₉ heteroalkylcycloalkyl, C₆-C₁₈ aryl, C₁-C₁₇ heteroaryl, C₇-C₂₀ aralkyl or C₂-C₁₉ heteroaralkyi groups. This expression refers furthermore especially to groups that may be substituted by one, two, three or more unsubstituted C₁-C₆ alkyl, C₂-C₆ alkenyl, C₂-C₆ alkyne, C₁-C₆ heteroalkyl, C₃-C₁₀ cycloalkyl, C₂-C₉ heterocycloalkyl, C₇-C₁₂ alkylcycloalkyl, C₂-C₁₁ heteroalkylcycloalkyl, C₆-C₁₀ aryl, C₁-C₉ heteroaryl, C₇-C₁₂ aralkyl or C₂-C₁₁ heteroaralkyl groups.

The term halogen preferably refers to F, Cl, Br or I.

According to a preferred embodiment, all alkyl, alkenyl, alkyne, heteroalkyl, aryl, heteroaryl, cycloalkyl, heterocycloalkyl, alkylcycloalkyl, heteroalkylcycloalkyl, aralkyl and heteroaralkyi groups described herein may independently of each other optionally be substituted.

When an aryl, heteroaryl, cycloalkyl, alkylcycloalkyl, heteroalkylcycloalkyl, heterocycloalkyl, aralkyl or heteroaralkyi group contains more than one ring, these rings may be bonded to each other via a single or double bond or these rings may be annulated.

Owing to their substitution, compounds of formula (I) may contain one or more centers of chirality. The present invention therefore includes both all pure enantiomers and all pure diastereoisomers and also mixtures thereof in any mixing ratio. The present invention moreover also includes all cis/trans-isomers of the compounds of the general formula (I) and also mixtures thereof. The present invention moreover includes all tautomeric forms of the compounds of formula (I)

The terms "C1 to C20" and "C1 to C18" as used herein include compounds having C1, C2, C3, C4, C5, C6, C7, C8, C9, C10, C11, C12, C13, C14, C15, C16, C17, C18, C19 or C20 carbon atoms or C1, C2, C3, C4, C5, C6, C7, C8, C9, C10, C11, C12, C13, C14, C15, C16, C17, or C18 carbon atoms, respectively. The term "C1 to C6" include C1, C2, C3, C4, C5, C6 carbon atoms. The term "C2 to C6" include, C2, C3, C4, C5, C6 carbon atoms. The groups may be present in linear, branched or cyclic form.

"Acyl" or "carbonyl" refers to the group -C(O)R wherein R is H, alkyl, alkenyl, alkyne, aryl, heteroaryl, carbocyclic, heterocarbocyclic, C1-C4 alkyl aryl or C1-C4 alkyl heteroaryl.

"Alkoxy" refers to the group -O-R wherein R is acyl, alkyl alkenyl, alkyl alkyne, aryl, carbocyclic, heterocarbocyclic, heteroaryl, C1-C4 alkyl aryl or C1-C4 alkyl heteroaryl.

"Amino" refers to the group -NR'R" wherein R' and R" are each, independently, hydrogen, alkyl, aryl, heteroaryl, C1-C4 alkyl aryl or C1-C4 alkyl heteroaryl. The R' and R" groups may themselves be linked to form a ring.

"Carboxyl" refers to the group -C(=O)OR, where R is a C1-C4 alkyl, aryl or heteroaryl. The alkyl or aryl group may be substituted or unsubstituted. Substituents may also be themselves substituted. When substituted, the substituent group is preferably, but not limited to, alkyl, alkoxy, heteroaryl, acyl, carboxyl, carbonylamino, nitro, amido, carbamoyl, amino, cyano, halogen or hydroxyl. The substituents may be positioned at various locations on an aryl group.

"Carbonyl" refers to the group -C(O)R wherein each R is, independently, hydrogen, alkyl, aryl, cycloalkyl, heterocycloalkyl, heteroaryl, C1-C4 alkyl aryl or C1-C4 alkyl heteroaryl.

"Heteroatom" means an atom other than carbon in the ring of a heterocyclic group or a heteroaromatic group or the chain of a heterogeneous group. Preferably, heteroatoms are selected from the group consisting of nitrogen, sulfur, phosphor and oxygen atoms. Groups containing more than one heteroatom may contain different heteroatoms.

"Heterocarbocyclic group" or "heterocycloalkyl" or "heterocyclic" means a monovalent saturated or unsaturated hydrocarbon ring containing at least one heteroatom. Heterocarbocyclic groups are monocyclic, or are fused, spiro, or bridged bicyclic ring systems. Monocyclic heterocarbocyclic groups contain 3 to 10 carbon atoms, preferably 4 to 7 carbon atoms, and more preferably 5 to 6 carbon atoms in the ring. Bicyclic heterocarbocyclic groups contain 8 to 12 carbon atoms, preferably 9 to 10 carbon atoms in the ring. Heterocarocyclic groups may be substituted or unsubstituted. Suitable substituents include, but are not limited to, lower alkyl, hydroxyl, nitrile, halogen and amino. Substituents may also be themselves substituted. Preferred heterocarbocyclic groups include epoxy, tetrahydrofuranyl, azacyclopentyl, azacyclohexyl, piperidyl, and homopiperidyl. More preferred heterocarbocyclic groups include piperidyl, and homopiperidyl. The most preferred heterocarbocyclic group is piperidyl. Heterocarbocyclic groups are preferably not aromatic.

"Thioalkyl" refers to the group -S-alkyl.

In an embodiment of the present invention, the compound according to the present invention of general formula I is a compound wherein n is zero and R¹, R² and R³ are independently selected from hydrogen, aryl, heteroaryl, arylthio, alkylthio, aryloxy, alkyloxy, and amino groups.

A further embodiment of the structure of general formula I is the structure of general formula III wherein n is two having the structure of general formula III 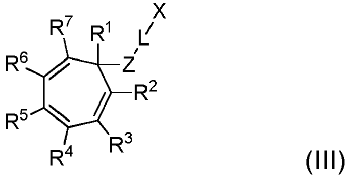 where R¹,R², R³, R⁴, R⁵, R⁶, R⁷ are independently selected from hydrogen, aryl, alkyl, heteroaryl, arylthio, alkylthio, aryloxy, alkyloxy, amino groups; any adjacent substituents may constitute an annulated ring system.

The compounds of general formula I, like of general formula III, can be used in the method according to the present invention. That is, in another aspect, the present invention relates to a method for mass spectrometry analysis of components in a sample wherein the compound capable of generating aromatic ions containing 4n+2 electrons in a closed ring system where n is a natural number including zero and the charge is located within the aromatic system is a compound of the general structure of general formula I 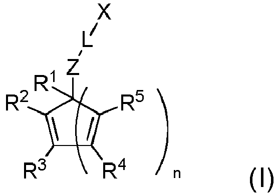
where n is zero or a natural number, and where R¹,R², R³, R⁴ and R⁵ are independently selected from hydrogen, aryl, alkyl, heteroaryl, arylthio, alkylthio, aryloxy, alkyloxy, amino, cyano, nitro, carboxy, ester, amide, acyl, formyl groups; any adjacent substituents may constitute an annulated ring system;
Z is O, S, Se, NR where R is H, alkyl or aryl,
L is linker containing between 1 and 20 atoms of carbon,
and X is a functional group in particular, COOH; COOR where R is succinimide or aryl; azide; alkyne; maleimide; hydrazine; hydrazide; hydroxylamine; amine; aldehyde; alkyl or arylketone; thiol; disulfide.

These compounds demonstrate a stabilized aromatic cations/anions useful as mass tags in mass spectrometry.

In an embodiment of the structure of general formula I, the structure is a compound of general formula II 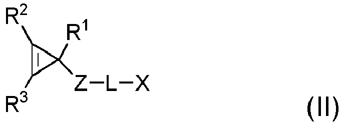
where R¹,R² and R³ are independently selected from hydrogen, aryl, alkyl, heteroaryl, arylthio, alkylthio, aryloxy, alkyloxy, amino groups,
Z is O, S, Se, NR where R is H, alkyl or aryl,
L is linker containing between 1 and 20 atoms of carbon,
and X is a functional group in particular, COOH; COOR where R is succinimide or aryl; azide; alkyne; maleimide; hydrazine; hydrazide; hydroxylamine; amine; aldehyde; alkyl or arylketone; thiol; disulfide.

Another embodiment of the compound to be used in the method according to the present invention is the structure of general formula III: 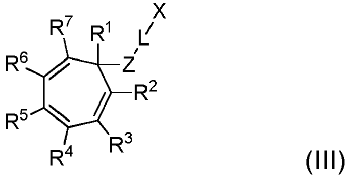
where R¹,R², R³, R⁴, R⁵, R⁶, R⁷ are independently selected from hydrogen, aryl, alkyl, heteroaryl, arylthio, alkylthio, aryloxy, alkyloxy, amino groups; any adjacent substituents may constitute an annulated ring system;
L is linker containing between 1 and 20 atoms of carbon,
Z is O, S, Se, NR where R is H, alkyl or aryl,
and X is a functional group, in particular, COOH; COOR where R is succinimide or aryl; azide; alkyne; maleimide; hydrazine; hydrazide; hydroxylamine; amine; aldehyde; alkyl or arylketone; thiol; disulfide.

Further, an embodiment of the present invention is a compound of the general formula I being a structure of general formula IV wherein R⁸ is selected from hydrogen, aryl, alkyl, heteroaryl, and each R⁹ are independently selected from hydrogen, alkyl, aryl, and electron donating groups:

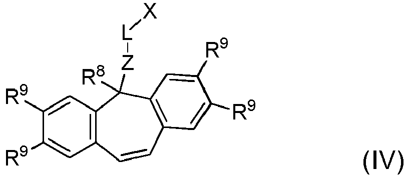

In an embodiment of the present invention, it is preferred that the structures, i.e. the compounds capable of generating aromatic ions are compounds containing aryl groups. That is, at least one of the substituent R of the compounds according to any one of general formula I, II, III and IV is an aryl group. The at least one aryl group present in the compounds allows to stabilize the carbon cations further. Various linkages may be used between the cation moiety, i.e. the stabilized aromatic cationic or anionic moiety, and the linker, like ether or amine. In an embodiment, said linkage is a thiol linkage which is less susceptible to acidic cleavage because of lower Brönstedt basicity of thiol ethers compared to e.g. ethers or a specially amines. That is, in the general structure of formulas I, II, III and IV Z is S.

The compounds described herein efficiently generate ions in both MALDI and ESI ionization conditions. This provide an additional advantage of their use as labels for mass spectrometry based assays. The compounds undergo smooth fragmentation of the bond between the cation core and hetero atom. The obtained ions can be detected by mass spectrometry at extremely low concentrations. That is, in an embodiment of the present invention, the method according to the present invention is a method wherein the mass spectrometry is with MALDI ionization or ESI ionization. Alternatively, the ionization in the method according to the present invention is a matrix free laser desorption ionization.

Various matrices can be used in MALDI analysis. In an embodiment, the mass spectrometry with MALDI ionization is performed using α-cyano-4-hydroxycinnamic acid and 3-metoxy-4-nitrobencoic acid. These matrices where found to be very efficient. In an embodiment, the method allows for compound detection in the femtomolar concentration range, in particular, below 10 femtomolar. That is, 10⁻¹² mol of detected label per sample can be determined, an amount comparable with current fluorescence detection limits. Thus, the mass tags according to the present invention and the method using said mass tags as described herein are suitable for the development of highly sensitive mass spectrometry based assays.

Further, the method according to the present invention as well as the structures according to the present invention allows an efficient ionization under laser irradiation without the use of matrix. The superstable cation precursors according to the present invention lead to very efficient generation of ions in matrix free LDI (laser desorption ionization) conditions unlike trityl derivatives known in the art.

While common trityl compounds like alkoxytritanols do not provide any significant ionization in LDI in useful range of concentrations, the structures provide herein effectively generate ions in matrix-free experiments. The presence of other molecules, including proteins in equivalent molar concentrations, do not inhibit ionization. Not to be bound to theory, it is assumed that this effect is caused by efficient absorption of laser radiation by chromophore which is contained within the structure of the mass tags as described herein. The chromophore absorbs radiation of laser - the standard MALDI nitrogen lasers emit at 337 nanometre - quite efficiently as it is known for stilbene, unlike common trityl derivatives used so far. It is assumed that this absorbance of laser light provides a kind of heating of analyte molecules and may probably contributes to ion yield via fragmentation of analyte excited state. No mass tags have been yet deliberately designed to absorb MALDI laser ionization or to increase ionization efficiency in LDI. Of note, matrix free ionization is highly desirable for the development of new mass spectrometry based assays because it allows to eliminate additional step of sample preparation, and also provides much lower background. Typically, submicromolar concentrations of analyte can be detected by matrix free LDI. Due to inhomogeneity of sample spots, typically multiple laser shots per sample are required to obtain a spectrum of analytes. It is assumed that this can be alleviated by automated sampling of several spectra from different parts of each sample spot and probably overcome by the use of advanced sample target plates with concentration zones.

As noted before, the method may include mass spectrometry with ESI ionization which may be carried out using standard HPLC-MS systems. The efficiency of ionization predetermines a lower detection limit for LC-MS analysis of compounds according to the present invention being at least comparable with most sensitive fluorescence detection.

Single ion mode (SIM) on mass tag peak can be used to maximize sensitivity of detection. The above method allows detection having detection limit of approximately 300 atomoles (3*10⁻¹⁵ moles) of mass tag per sample. As demonstrated in the examples, mass tags according to the present invention for derivatisation of a mixture of compounds to be analysed, in the example primary amines, and subsequently detection of them by SIM monitoring on 267 Da allows detection at low-femtomolar concentration range.

Two modes of attachment to biomolecules are possible for the mass tags according to the present invention and the mass tags useful in the method according to the present invention, namely, cleavable and non-cleavable attachment. Cleavable means that the mass tag is released from the analysed molecule during ionization while non-cleavable relates to a conjugate of analyte with mass tag is present in the mass analysis. While cleavable mass tags are useful for multiplex analysis, non-cleavable mass tags can facilitate detection of other molecules which are not readably analysed by mass spectrometry including small molecules, metabolites, carbohydrates, and others. The use of the highly ionisable group for the derivatisation allows to obtain high sensitivity of these assays.

In case of mass tags with uncleavable linker, these molecules may contain reactive linker, like a carboxygroup, which can be converted to other reactive forms. These forms include NHS ester, hydrazide, and maleimide. These reactive forms can be used for the derivatisation of small molecules, for example at metabolomics studies, via various chemical reactions. These linkers allow the molecules to be analysed to the molecular core covalently for detection either in MALDI or ESI experiments. The M/z ratio of the ions allows to infer molecular formula of the conjugated molecules, and their composition.

That is, in another aspect the present invention provides the use of the compounds according to the present invention in a method for mass spectrometry analysis according to the present invention.

In addition, the present invention relates to a kit of reagents containing the compounds according to the present invention. These kits are configured for mass spectrometry analysis, in particular, mass spectrometry analysis with a method according to the present invention.

It is noted that the term "comprising" or "containing" includes the specific embodiment of "consisting of".

### Examples

The following examples have been included to illustrate modes of the present disclosed subject matter. In light of the present disclosure and the general level of the skilled in the art, those of skilled will appreciate that the following examples are intended to be exemplary only and that numerous changes, modifications or auto rations can be employed without departing from the scope of the present disclosed subject matter.

### Triphenylcyclopropenium tetrafluoroborate (1a).

A dry 100-mL flask, equipped with a magnetic stirring bar and a reflux condenser and rubber septum was flushed with argon and charged with a mixture of diphenyl acetylene (1.5 g, 8.41 mmol) and potassium tert-butoxide (3.8 g, 33.64 mmol) in dry benzene (50 mL). Efficient magnetic stirring was initiated, and benzylidene chloride (2.7 g, 16.82 mmol) was added. The reaction mixture was then heated under reflux for 6 h. Then, the reaction mixture was cooled to room temperature, water (100 mL) was added to remove inorganic salts. The organic layer was separated and the aqueous layer was extracted with toluene (2x50 mL). The organic layers were combined, dried over Na₂SO₄, and filtered. The filtrate was acidified with HBF₄ (4 eq of 50% aq. solution), whereupon a light yellow precipitate formed. It was filtered an dried in vacuum of oil pump to give title compound. Yield 1.787 g (60%). ¹H NMR (CD₃CN): 7.93 (t, 6H, *³J* = 7.7 Hz), 8.08 (dd, 3H, *³J_{o,m}* = *³J_{m,p}* = 7.7 Hz), 8.61 (d, 2H, *³J* = 7.7 Hz). ¹³C NMR (CD₃CN): 121.0, 131.5, 136.9, 139.5, 156.8.

### 4-Methoxyphenyldiphenylcyclopropenium tetrafluoroborate (1b).

A 100 mL flask, equipped with a magnetic stirring bar and a reflux condenser fitted was flushed with argon and charged with a solution of 4-methoxytolan (660 mg, 3.16 mmol) in dry benzene (40 mL), and potassium tert-butoxide (1.42 g, 12.7 mmol). Efficient magnetic stirring was initiated, and α,α-dichlorotoluene (1.03 g, 6.4 mmol) was added dropwise over 5 min via a syringe under argon. The reaction mixture was then heated under reflux for 8 hr during which time the precipitate dissolved. After the reaction mixture was cooled to room temperature, 100 mL of water was added to remove inorganic salts. The organic layer was separated, and the aqueous layer was extracted with toluene (2x50 mL). The organic layers were combined, dried over sodium sulfate, and filtered. HBF₄ (3 eq, approx. 7 ml) was added, and the mixture was agitated, and a light yellow precipitate formed. The two phase system was filtered, the solid was washed sequenlty by toluene and diethyl ether and dried to afford 605 mg (50%) of the product. ¹H NMR (DMSO-*d₆*): 4.06 (s, 3H), 7.43 (d, 2H, ³J = 8.06 Hz), 7.86 - 8.00 (m, 4H), 8.01 - 8.16 (m, 2H), 8.54 - 8.78 (m, 6H). ¹³C NMR (DMSO-*d₆*): 56.51, 112.13, 116.14, 120.33, 130.35, 135.35, 137.47, 139.23, 152.21, 167.24.

### 2,4-Dimethoxyphenyldiphenylcyclopropenium tetrafluoroborate (1c).

Oxalyl chloride (461 mg, 3.63 mmol) was added to a stirring solution of diphenylcyclopropenone (500 mg, 2.42 mmol) in DCM (3 mL) at 0°C. After stirring for 1 h the mixture was allowed to warm to r.t. Then mixture was evaporated, and white crystals of dichloride were thus obtained. A solution of dimethoxybenzene (501 mg, 3.63 mmol) in 8 mL DCM was added to fresh-preparated dichloride in 4 mL DCM. Then BF3 diethyl etherate (1 mL) was added to the mixture. The reaction mixture was then heated under reflux for 4 hr. After the reaction mixture was cooled to room temperature, 10 mL of diethyl ether was added, and the precipitate was filtrated. Yield 680 mg (70%). ¹H NMR (DMSO-*d₆*): 4.06 (s, 3H), 4.17 (s, 3H), 6.90 - 7.08 (m, 2H), 7.81 - 7.96 (m, 4H), 7.96 - 8.11 (m, 2H), 8.42 (d, *³J* = 8.79 Hz, 1H), 8.51 (d, *³J* = 7.32 Hz, 4H). ¹³C NMR (DMSO-*d₆*): 56.6, 56.8, 98.7, 109.43, 120.8, 130.1, 134.8, 136.7, 139.5, 148.4, 164.80, 170.3.

### 2,3-Bis(2,4,6-trimethoxyphenyl)cycloprop-2-en-1-one.

A solution of 1,3,5-trimethoxybenzene (1.89 g, 11.25 mmol) in DCM (5 mL) was added dropwise to a stirred mixture of AlCl3 (900 mg, 6.47 mmol) and tetrachlorocycloproprene (1 g, 5.62 mmol) in DCM (20 mL) at -70°C. After stirring for 2 h at -70°C the reaction was allowed to heat to room temperature, and was stirred overnight. Then reaction was quenched by the addition of water (50 mL). Organic layer was separated, washed with brine (50 mL) and dried over Na2SO4. Product was purified by column chromatography using toluene:EtOAc (6:1) as eluent. Product was obtained as white solid (yield 720 mg, 34%). ¹H NMR (CDCl₃): 3.77 (s, 12H, 4 OMe), 3.87 (s, 6H, 2 OMe), 6.10 (s, 4H, CH). ¹³C NMR (CDCl₃): 55.3, 55.6, 89.8, 99.8, 141.3, 155.5, 161.1, 164.3.

### 1,2,3-Tris-(2,4,6-trimethoxyphenyl)cyclopropenium tetrafluoroborate (1d).

Oxalyl chloride (124 mg, 1 mmol) was added to a stirring solution of 2,3-bis(2,4,6-trimethoxyphenyl)cycloprop-2-en-1-one (250 mg, 0.65 mmol) in DCM (3 mL) at 0°C. After stirring for 1 h the mixture was allowed to warm to r.t. Then mixture was evaporated, and white crystals of dichloride were thus obtained. A solution of dimethoxybenzene (501 mg, 3.63 mmol) in 8 mL DCM was added to fresh-preparated dichloride solution in 4 mL DCM. Then BF₃ diethyl etherate (1 mL) was added to the mixture. The reaction mixture was then heated under reflux for 4 hr. After the reaction mixture was cooled to room temperature, 10 mL of diethyl ether were added, and the precipitate was filtered. Yield 210 mg (52%).%). ¹H NMR (CDCl₃): 3.79 (s, 18H, 6 OMe), 3.99 (s, 9H, 3 OMe), 6.22 (s, 6H, CH). ¹³C NMR (CDCl₃): 56.1, 56.3, 90.6, 95.4, 146.2, 163.8, 169.2.

### Phenyl-bis-(4-methoxyphenyl)cyclopropenium tetrafluoroborate (1e). 1-Pyrenyldiphenylcyclopropenium tetrafluoroborate (1f).

A 100-mL flask, equipped with a magnetic stirring bar and a reflux condenser and rubber septum was flushed with argon and charged with a solution of 1-phenylethynylpyrene (600 mg, 2 mmol) and t-BuOK (884 mg, 8 mmol) in dry benzene (20 mL). Efficient magnetic stirring was initiated, and benzylidene chloride (635 mg, 4 mmol) was added. The reaction mixture was then heated under reflux for 6 h, during this time the precipitate dissolved. After the reaction mixture was cooled to room temperature, water (30 mL) was added to remove inorganic salts. The organic layer was separated and the aqueous layer was extracted with toluene (2 × 30 mL). The organic layers were combined, dried over Na₂SO₄, and filtered. The filtrate was acidified by HBF₄ (4 eq of 50% aq. solution), whereupon an ochre precipitate formed. The precipitated was filtered off and dried in vacuum of oil pump. Yield 383 mg (40%). ¹H NMR (CD₃NO₂): 7.90 - 8.06 (m, 4H), 8.07 - 8.20 (m, 2H), 8.22 - 8.38 (m, 2H), 8.41 - 8.71 (m, 10H), 9.01 (d, *³J* = 8.07 Hz, 1H). ¹³C NMR (CD₃NO₂): 114.30, 121.99, 124.55, 125.31, 125.67, 126.82, 128.71, 129.27, 130.70, 130.81, 131.69, 131.96, 132.29, 133.81, 134.00, 134.87, 135.41, 136.80, 139.60, 140.07, 154.59, 156.84. MALDI-TOF MS 390.97 (M⁺, calcd. 391.15).

### 6-(triphenylcyclopropenylthio)hexanoic acid (5a).

1,2,3-triphenylcyclopropenylium tetrafluoroborate (256 mg, 0.72 mmol) and 1,2,3-triphenylcyclopropenylium tetrafluoroborate (139 mg,0.93 mmol) were dissolved in MeCN (5 mL), then pyridine (100 µL) was added to the reaction mixture. After 12 h of stirring at ambient conditions the reaction was evaporated and diluted with EtOAc (50 mL) and water (50 mL). Organic layer was washed three times with water, dried over sodium sulfate and concentrated under vacuum to give crude product, which was purified by column chromatography (toluene:EtOAc = 5:1) to yield 120 mg (40%) of pure product as colorless oil. ¹H NMR (DMSO-*d₆*): 1.09-1.23 (m, 2H, CH₂), 1.23-1.43 (m, 4H, 2 CH₂), 2.04 (t, 2H, *³J* = 7.0 Hz, CH₂), 2.42 (t, 2H, ³*J* = 7.2 Hz, CH₂), 7.18 (t, 1 H, *³J* = 7.2 Hz, p-CH), 7.30 (t, 2H, ³*J* = 7.5 Hz, *p*'-CH), 7.43-7.61 (m, 8H, *m*'-CH, *m*-CH, o-CH), 7.79 (d, 4H, ³*J* = 7.0 Hz, O'-CH), 11.9 (br.s, 1 H, CO₂H). ¹³C NMR (DMSO-*d₆*): 23.9, 27.8, 29.5, 30.4, 33.4, 118.1, 126.3, 126.7, 126.8, 128.3, 129.37, 129.42, 129.8, 143.9, 174.2.

### 6-(triphenylcyclopropenylthio)hexanoic acid N-hydroxysuccinimide ester (6a).

6-(Triphenylcyclopropenylthio)hexanoic acid (120 mg, 0.3 mmol), disuccinimidyl carbonate (115 mg, 0.45 mmol) and Et₃N (100 µL) were dissolved in MeCN (10 mL) and DCM (10 mL). The reaction was stirred overnight and then solvent was evaporated. The reaction was quenched with water (20 mL) and EtOAc (20 mL), and organic layer was separated, and dried over sodium sulfate. The crude product was purifed by column chromatography (PhMe:EtOAc = 5:1) to give 75 mg of pure compound (yield 49%). ¹H NMR (DMSO-*d₆*): 1.19-1.32 (m, 2H, CH₂), 1.32-1.47 (m, 4H, 2 CH₂), 2.38-2.51 (m, 4H, 2 CH₂, overlapping with DMSO), 2.81 (s, 4H, NHS), 7.19 (t, 1H, *³J* = 7.5 Hz, p-CH), 7.30 (t, 2H, *³J* = 7.5 Hz, *p*'-CH), 7.44-7.62 (m, 8H, *m*'-CH, *m*-CH, o-CH), 7.98 (d, 4H, *³J*= 7.5 Hz, *o*'-CH). ¹³C NMR (DMSO-*d₆*): 23.6, 25.4, 27.2, 29.3, 29.9, 30.2, 118.1, 126.3, 126.7, 126.8, 128.3, 129.37, 129.42, 129.8, 143.9, 168.7, 170.1

### Phenyldibenzotropyl alcohol.

A 250-mL round-bottomed flask was flushed with argon, loaded with dibenzosuberenone (1.7 g, 8.25 mmol) and abs. ether (150 mL). Then a solution of phenylmagnesium bromide in THF (1.25M, 13.2 mL, 16.5 mmol) was dropwise added to the vigorously stirred solution in argon atmosphere. White precipitate immediately formed (Note 1). After 12 h, the reaction was quenched by the addition of 10% aq. KH₂PO₄ (200 mL). The product was extracted with EtOAc (3x100 mL), organic layer dried over Na₂SO₄ and evaporated. Crude solid compound was recrystallized from 96% EtOH to give the crystalline product as colorless needles (2.066 g, 88%), m.p. 158°C. ¹H NMR (DMSO-*d₆*). 6.29 (s, 1 H, OH), 6.49 (dd, 2H, *³J* = 7.4 *Hz, ⁴J* = 1.4 Hz, CH), 6.68 (s, 2H), 6.99-7.11 (m, 3H), 7.29-7.38 (m, 4H), 7.45-7.54 (m, 2H), 8.13 (d, 2H, *³J* = 8.1 Hz). ¹³C NMR (DMSO-*d₆*). 77.7, 125.2, 126.7, 127.0, 127.1, 127.2, 128.0, 128.7, 131.4, 133.3, 143.4, 145.9.

### 6-(Phenyldibenzotropylthio)hexanoic acid (5c).

A 100-mL round-bottomed flask was charged with phenyldibenzotropyl alcohol (534 mg; 1.88 mmol), 6-mercaptohexanoic acid (281 mg; 1.9 mmol) and dry DCM (30 mL). Then BF₃-OEt₂ (60 µl, 0.47 mmol) was added. After 12h the reaction mixture was diluted with DCM (70 mL) and dist. water (50 mL) has been added. The pH was adjusted to 7 by addition of NaHCO₃ saturated solution. Organic layer was separated, dried with Na₂SO₄, and evaporated. The solid residue was washed with toluene (20 mL), hexane (20 mL) and desiccated in vacuum of oil pump to give 420 mg (yield 72%) of crystalline product. ¹H NMR (DMSO-*d₆*). 1.02-1.42 (m, 6H, 3 CH₂), 1.84-2.19 (m, 4H, 2 CH₂), 6.30-6.44 (m, 2H, CH), 6.66 (s, 2H, CH), 6.90-7.10 (m, 3H, CH), 7.24-7.60 (m, 6H, CH), 8.14 (d, 2H, *³J* = 7.6 Hz, CH), 11.9 (br.s, 1H, CO₂H). ¹³C NMR (DMSO-*d₆*). 24.0, 27.5, 27.9, 29.8, 33.4, 64.0, 125.8, 126.3, 126.4, 126.8, 126.9, 128.2, 129.1, 131.2, 134.2, 139.6, 143.3, 174.3.

### 6-(Phenyldibenzotropylthio)hexanoic acid (6c).

6-(Phenyldibenzotropylthio)hexanoic acid (630 mg, 1.52 mmol) was dissolved in 1:1 MeCN:DCM mixture (30 mL) under magnetic stirring. Then disuccinimidyl carbonate (545 mg, 2.13 mmol) and NEt₃ (253 µl, 1.82 mmol) were added. After 12h, reaction mixture was diluted with DCM (100 mL) and the obtained solution was washed with sat. NaHCO₃ (2x50 mL), dist H₂O (50 mL), brine (70 mL) and dried over Na₂SO₄. After evaporation of solvent the residue was chromatographed on silica gel (from 5 to 10% of EtOAc in PhMe). Product was obtained as colorless foam (683 mg; 1.33 mmol; yield 88%).

### 4-Methoxyphenyldibenzotropyl alcohol.

A 250-mL round-bottomed flask was flushed with argon, loaded with dibenzosuberenone (1.8 g; 8.74 mmol) and abs. ether (100 mL). Then a solution of p-anisylmagnesium bromide in THF (1.25M, 13.99 mL, 17.48 mmol) was dropwise added to the vigorously stirring solution in argon atmosphere. Yellowish precipitate immediately formed (Note 1). Reaction mixture was refluxed for 30 minutes, cooled and quenched by the addition of 10% KH₂PO₄ (200 mL). The product was extracted with EtOAc (3x100 mL), organic layer dried over Na₂SO₄ and evaporated. Crude solid compound was purified by flash column chromatography (PhMe) and recrystallized from hexane-PhMe mixture to give the crystalline product as colorless needles (2.19 g, 80%), m.p. 138-139°C. 1H NMR (DMSO-*d₆*). 3.63 (s, 3H, OMe), 6.14 (s, 1 H, OH), 6.38 (d, 2H, *³J* = 8.9 Hz, CH), 6.59 (d, 2H, *³J* = 8.9 Hz, CH), 6.69 (s, 2H, CH), 7.29-7.37 (m, 4H, CH), 7.44-7.52 (m, 2H, CH), 8.12 (d, 2H, *³J* = 8.0 Hz, CH). ¹³C NMR (DMSO-*d₆*). 55.2, 77.2, 112.4, 125.2, 126.6, 128.0, 128.3, 128.7, 131.4, 133.3, 138.0, 143.8, 158.2.

### 6-(4-Methoxyphenyldibenzotropylthio)hexanoic acid (5c).

A 100 mL round-bottomed flask was charged with anisyldibenzotropyl alcohol (1.602 g, 5.1 mmol), 6-mercaptohexanoic acid (755 mg, 5.15 mmol), and dry DCM (70 mL). Then BF₃ etherate (162 µl, 1.2 mmol) was added. After 12h the reaction mixture was diluted with DCM (100 mL) and dist. H₂O (50 mL) was added. The pH was adjusted to 7 by addition of NaHCO₃ saturated solution. Organic layer was separated, dried with Na₂SO₄, and evaporated. The solid residue was washed with toluene (20 mL), hexane (20 mL) and desiccated in vacuum of oil pump to give 1.876 g (83%) of crystalline product. ¹H NMR (DMSO-*d₆*). 1.05-1.43 (m, 6H, 3 CH₂), 1.91-2.18 (m, 4H, 2 CH₂), 3.64 (s, 3H, OMe), 6.28 (d, 2H, *³J* = 8.5 Hz, CH), 6.55 (d, 2H, *³J* = 8.5 Hz, CH), 6.71 (s, 2H, CH), 7.28-7.44 (m, 4H, CH), 7.45-7.56 (m, 2H, CH), 8.13 (d, 2H, *³J* = 8.0 Hz, CH), 11.9 (br.s, 1 H, CO₂H). ¹³C NMR (DMSO-*d₆*). 24.0, 27.6, 28.0, 29.7, 33.4, 54.8, 63.8, 111.6, 125.2, 126.6, 128.0, 128.3, 128.7, 131.4, 133.3, 138.0, 143.8, 158.2.

### 5-Phenyl-2,8-dimethoxysuberenol.

A 100-mL round-bottomed flask was flushed with argon, loaded with 2,8-dimethoxydibenzosuberenone (410 mg, 1.54 mmol) and abs. ether (50 mL). Then a solution of phenylmagnesium bromide in THF (0.75M, 2.26 mL, 1.7 mmol) was dropwise added to the vigorously stirring solution in argon atmosphere. Yellowish precipitate immediately formed. A half of an hour later the reaction was quenched by the addition of 10% aq. KH₂PO₄ (50 mL). The product was extracted with EtOAc (2×50 mL), organic layer dried over Na₂SO₄ and evaporated. Crude solid compound was purified by flash-chromatography on silica gel (gradient of DCM in toluene from 0 to 50%) to give the colorless crystalline product (198 mg, 0.57 mmol; yield 37%). ¹H NMR (DMSO-*d₆*). 3.77 (s, 6H, 2 OMe), 6.10 (s, 1H, OH), 6.50-6.53 (m, 2H, CH), 6.60 (s, 2H, CH), 6.88 (d, 2H, *⁴J* = 2.9 Hz, CH), 6.99-7.09 (m, 7H, CH), 7.99 (d, 2H, CH, *³J* = 8.8). ¹³C NMR (DMSO-*d₆*). 55.5, 77.2, 113.3, 113.9, 126.6, 126.9, 127.2, 128.1, 131.7, 134.5, 136.9, 146.7, 157.9.

### 6-(5-Phenyl-2,8-dimethoxysuberenylthio)hexanoic acid (6e).

A 100 mL round-bottomed flask was charged with 5-phenyl-2,8-dimethoxysuberenol (167 mg, 0.48 mmol), 6-mercaptohexanoic acid (76 mg, 0.51 mmol), and dry DCM (20 mL). Then BF₃ etherate (15 µl, 0.12 mmol, 25 mol.%) was added. After 12h the reaction mixture was diluted with DCM (50 mL) and triethylamine (150 µL) was added. The obtained solution was washed with 5% citric acid (2×25 ml). Organic layer was removed and dried with Na₂SO₄. After the evaporation of the solvent the crude product was obtained as a yellow oil. It was purified by column chromatography on silica gel (5% acetone in toluene). After evaporation of fractions containing the product, colorless crystalline solid was obtained. Yield 152 mg (0.32 mmol; 67%). ¹H NMR (DMSO-*d₆*). 1.11-1.19 (m, 4H, 2 CH₂), 1.26-1.34 (m, 2H, CH₂), 1.92-1.99 (m, 2H, CH₂), 2.07 (t, 2H, CH₂, *³J* = 7.1 Hz), 3.76 (s, 6H, OMe), 6.39-6.43 (m, 2H, CH), 6.59 (s, 2H, CH), 6.92 (d, 2H, CH, *⁴J* = 2.7 Hz), 6.94-7.00 (m, 3H, CH), 7.05 (dd, 2H, *CH, ³J* = 8.5 Hz, *⁴J* = 2.7 Hz), 7.97 (d, 2H, CH, *³J* = 8.7 Hz). ¹³C NMR (DMSO-*d₆*). 24.4, 28.0, 28.3, 30.2, 33.8, 55.6, 63.3, 113.9, 114.3, 126.0, 126.7, 127.4, 128.4, 131.8, 133.7, 135.8, 144.6, 157.8, 174.7.

### MALDI-TOF and LDI-TOF analysis of cations and their precursors.

Samples of cations and precursors were dissolved in acetonitrile, and applied onto a target plate (for LDI) or target plate containing matrix (MALDI), and analyzed using Bruker Ultraflex I instrument.

## Claims

1. Method for mass spectrometry analysis of components in a sample whereby said components are labelled with compounds capable of generating aromatic ions comprising the steps of
- contacting the sample to be analysed with compunds capable of generating aromatic ions containing 4n+2 electrons in a closed ring system, whereby n is a natural number including zero and the charge is located within the aromatic system;
- covalent or non-covalent binding of said compounds capable of generating aromatic ions with components of the sample,
- optional workup of the sample,
- detecting by mass spectrometry of aromatic ions containing 4n+2 electrons in the closed ring system where n is a natural number including zero and the charge is located within the aromatic system.

2. The method according to claim 1 wherein said compound capable of generating aromatic ions containing 4n+2 electrons in the closed ring system where n is a natural number including zero and the charge is located within the aromatic system is a compound of the general structure of general formula I 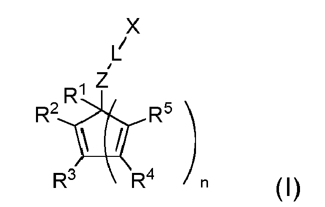
where n is zero or a natural number, and where R¹,R², R³, R⁴ and R⁵ are independently selected from hydrogen, aryl, alkyl, heteroaryl, arylthio, alkylthio, aryloxy, alkyloxy, amino, cyano, nitro, carboxy, ester, amide, acyl, formyl groups; any adjacent substituents may constitute an annulated ring system;
Z is O, S, Se, NR where R is H, alkyl or aryl,
L is linker containing between 1 and 20 atoms of carbon,
and X is a functional group in particular, COOH; COOR where R is succinimide or aryl; azide; alkyne; maleimide; hydrazine; hydrazide; hydroxylamine; amine; aldehyde; alkyl or arylketone; thiol; disulfide.

3. The method according to claim 2 wherein the structure of general formula I is a structure of general formula II: 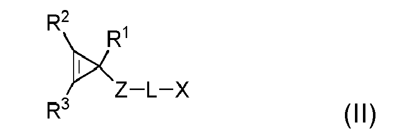
where R¹,R² and R³ are independently selected from hydrogen, aryl, alkyl, heteroaryl, arylthio, alkylthio, aryloxy, alkyloxy, amino groups,
Z is O, S, Se, NR where R is H, alkyl or aryl,
L is linker containing between 1 and 20 atoms of carbon,
and X is a functional group in particular, COOH; COOR where R is succinimide or aryl; azide; alkyne; maleimide; hydrazine; hydrazide; hydroxylamine; amine; aldehyde; alkyl or arylketone; thiol; disulfide.

4. The method according to claim 2 wherein the structure of general formula I is a structure of general formula III: 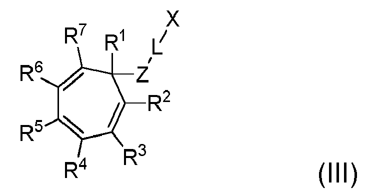
where R¹,R², R³, R⁴, R⁵, R⁶, R⁷ are independently selected from hydrogen, aryl, alkyl, heteroaryl, arylthio, alkylthio, aryloxy, alkyloxy, amino groups; any adjacent substituents may constitute an annulated ring system;
L is linker containing between 1 and 20 atoms of carbon,
Z is O, S, Se, NR where R is H, alkyl or aryl,
and X is a functional group, in particular, COOH; COOR where R is succinimide or aryl; azide; alkyne; maleimide; hydrazine; hydrazide; hydroxylamine; amine; aldehyde; alkyl or arylketone; thiol; disulfide.

5. A method according to claim 2 wherein the structure of the general formula I is a structure of general formula IV, where R⁸ is selected from hydrogen, aryls, alkyls, heteroaryls, and each R⁹ are independently selected from hydrogen, alkyls, aryls, and electron donating groups:

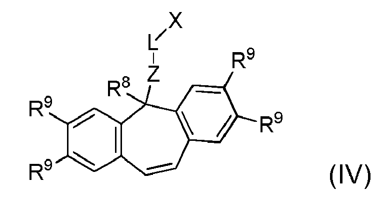

6. The method according to any one of the preceding claims wherein mass spectrometry is with MALDI ionisation or ESI ionisation.

7. The method according to any one of claims 1 to 5 wherein ionisation is Matrix free laser desorption ionisation.

8. A method according to any one of the preceding claims wherein single ion mode on the mass tag is conducted.

9. The method according to any one of the preceding claims allowing for compound detection in the femtomolar concentration range,in particular, below 10 femtomolar.

10. A compound of the general structure of formula I 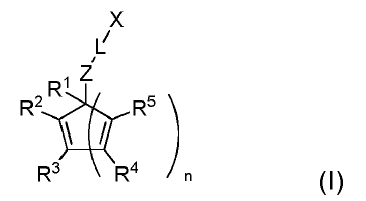
wherein n is a natural number including zero, R¹, R², R³, R⁴ and R⁵ are independently selected from hydrogen, aryl, alkyl, heteroaryl, aryl thiol, alkyl thiol, aryloxy, alkyloxy, amino, cyano, nitro, carboxy, ester, amide, acyl, formyl groups;
L is a linker with C₁ to C₂₀ carbon atoms;
Z is selected from O, S, Se, NR wherein R is H, alkyl or aryl,
X is a functional group, preferably COOH; COOR¹¹ wherein R¹¹ is succinimide, aryl, azide, alkyne, maleimide, hydrazine, hydrazide, hydroxylamine, amine, aldehyde, alkyl or arylketone, thiol, disulfide.

11. The compound according to claim 10 wherein n is zero and R¹, R² and R³ are independently selected from hydrogen, aryls, heteroaryls, arylthio, alkylthio, aryloxy, alkyloxy, amino groups.

12. The compound according to claim 10 wherein n is two having the structure of general formula III 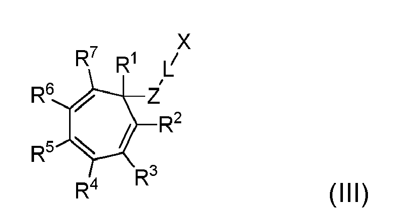 where R¹,R², R³, R⁴, R⁵, R⁶, R⁷ are independently selected from hydrogen, aryl, alkyl, heteroaryl, arylthio, alkylthio, aryloxy, alkyloxy, amino groups; any adjacent substituents may constitute an annulated ring system.

13. Use of a compound according to any one of claims 10 to 12 in a method according to any one of claims 1 to 9.

14. A kit of reagents containing compounds as defined in any one of claims 10 to 12.

15. The use of a kit of reagents according to claim 14 in mass spectrometry analysis.

16. The use according to claim 5 in a method according to any one of claims 1 to 9.
